# EUROPEAN PATENT APPLICATION

(11) **EP 2 517 553 A1**
(43) Date of publication of application: **31.10.2012**
(21) Application number: 09852465.5
(22) Date of filing: 25.12.2009
(51) Int. Cl.: A01K 63/04, B01F 3/04, C02F 7/00

(54) **EASING PRESSURE OXYGEN-DISSOLVING DEVICE**

(71) Applicant: Chen, Jian'an, Taiwan (CN)
(72) Inventor: Chen, Jian'an, Taiwan (CN)
(74) Representative: Lang, Christian
(86) International application number: PCT/CN2009/076075
(87) International publication number: WO 2011/075915

(57) **Abstract**

A pressure-reduction oxygen dissolving apparatus includes a container, at least one wave-shaped layer in the container for exchanging gases, at least one oxygen storage/exchange tank on each wave-shaped layer for exchanging gases, a water inlet at the top of the container for filling water into the container, a water outlet installed at the bottom of the container for discharging water out from the container, and a gas inlet for filling oxygen into the container. The oxygen enters into the container through the gas inlet to fill up each oxygen storage/exchange tank. After the oxygen has reached a specific pressure, water enters into the container from the water inlet and flows through chambers of the oxygen storage/exchange tank, and oxygen is dissolved in water naturally. Since the pressure increases the dissolved oxygen content significantly, the water outlet can be opened to obtain water with higher oxygen content.

## Description

### BACKGROUND OF THE INVENTION

### 1. Field of the invention

The practical new invention relates to an apparatus that lets oxygen be dissolved into water. In particular a kind of apparatus that utilizes oxygen or increases water pressure to greatly increase the oxygen dissolved into the water, so it is a pressure reducing oxygen dissolving apparatus that increases oxygen levels in water.

### 2. Description of Related Art

Oxygen is a main and necessary element for maintaining the life of most animals, but when the oxygen content of water is relatively low, it takes lots of effort for marine animals to have enough oxygen, and the dissolved oxygen content of water usually varies with environmental changes, such as sunlight shining on the water or the area of water that is in contact with air. Thus the dissolved oxygen content is an important factor and index used for indicating the growth and reproduction of marine animals. Most breeders generally install water wheels for creating turbulence to water surfaces to increase the contact area between air and water and accelerate the process of dissolving oxygen in water, so as to prevent sickness and death of the breeding animals caused by inadequate dissolved oxygen, thereby maintaining their expected business profit. The water wheels are provided for increasing the dissolved oxygen content in the water.

Although the conventional water wheels or oxygen dissolving devices used by breeders can dissolve oxygen into water, these ways of dissolving oxygen can provide a low dissolution of oxygen, and the dissolution rate is very slow. When air is pumped into water directly, the oxygen content absorbed by water may be less than 10%, and the remaining 90% of the oxygen content disappears into the air directly. Therefore, it is an important subject for related manufacturers to maximize the utility of oxygen and increase the oxygen content in water effectively.

### SUMMARY OF THE INVENTION

In view of the shortcomings of the conventional water wheels that cannot increase the oxygen content in water effectively, the inventor of the present invention has, based on years of experience in the related industry and after conducting extensive research and experiments, finally developed a pressure-reduction oxygen dissolving apparatus in accordance with the present invention to increase the oxygen content in water effectively.

Therefore, it is a primary objective of the present invention to overcome the shortcomings of the prior art by providing a pressure-reduction oxygen dissolving apparatus to increase the content of the saturated dissolved oxygen effectively.

To achieve the foregoing objective, the present invention provides a pressure-reduction oxygen dissolving apparatus comprising:
a container, being a hollow structure;
at least one wave-shaped layer to exchange gases, installed layer by layer in the container;
at least one oxygen storage/exchange tank, installed on each wave-shaped layer in the container, for exchanging gases;
a water inlet, installed at the top of the container, for filling water into the container;
a water outlet, installed at the bottom of the container, for discharging water from the container to the outside; and
a gas inlet, installed at the bottom of the container, for filling pure oxygen into the container.
Wherein, the container is made of an acrylic or metal material.
Wherein, the water filter is installed at the front end of the water inlet for filtering impurities in water.

With the aforementioned structure, the pressure-reduction oxygen dissolving apparatus of the present invention has the following effects:
1. Water pressure is applied to increase the dissolved oxygen content in water, instead of applying air pressure for increasing the pressure, because it is difficult to recycle and reuse undissolved oxygen when air pressure is applied.
2. The contact area between liquid and gas is increased, such that the oxygen gas can be dissolved into water more quickly.
3. Oxygen that is not dissolved in water will remain in the container, and only the oxygen that is dissolved in water will exit the container from the water outlet below, so that the utility rate of oxygen can reach up to 100%.
4. The wave-shaped layer of the present invention is provided for increasing the turbulence of the water flow, and the gap between each wave-shaped layer is to prevent the gases in each layer to flow back and mix, and the turbulence in the water flow increases the contact area between gas and water to accelerate a gas exchange, such that a large quantity of oxygen in water can be obtained at a lower layer.

To make it easier for the examiner to understand the technical characteristics of the present invention, please refer to the diagram below as well as the practical instructions for this novel invention.

### BRIEF DESCRIPTION OF THE DRAWINGS

The invention, as well as its many advantages, may be further understood by the following detailed description and drawings in which:
FIG. 1 is a schematic cross-sectional view of a pressure-reduction oxygen dissolving apparatus in accordance with the present invention; and
FIG. 2 is a schematic perspective view of a pressure-reduction oxygen dissolving apparatus in accordance with the present invention.

### Symbols of the major components:

Container 10
Wave-shaped layers 20
Water inlet A
Water outlet B
Gas inlet C
Oxygen storage exchange tank E
Oxygen storage exchange tank F
Oxygen storage exchange tank G
Oxygen storage exchange tank I
Oxygen storage exchange tank J
Oxygen storage exchange tank K
Oxygen storage exchange tank L
Other gas storage tank M

### DETAILED DESCRIPTION OF THE INVENTION

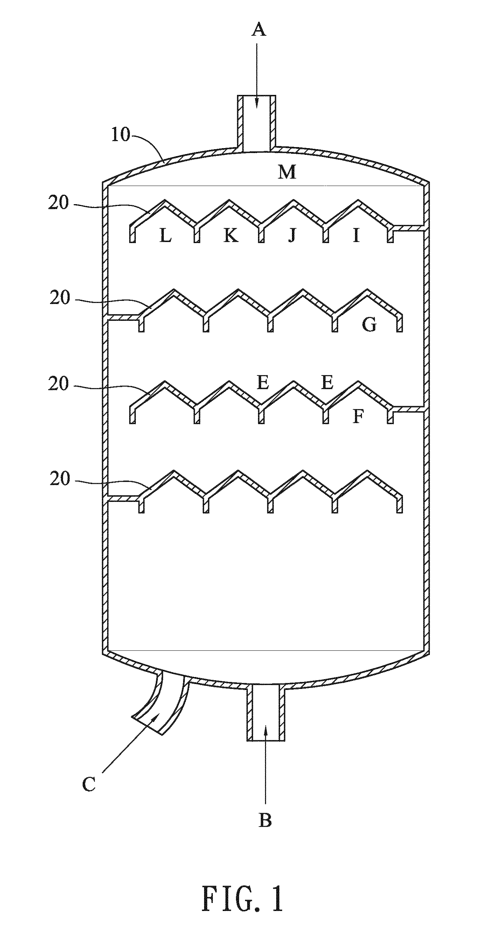

With reference to FIG. 1 for a schematic cross-sectional view of a pressure-reduction oxygen dissolving apparatus in accordance with the present invention, the pressure-reduction oxygen dissolving apparatus comprises: a container 10, which is a hollow body with a design capable of resisting pressure (wherein the container 10 of a preferred embodiment of the invention is in a circular cylindrical shape); at least one wave-shaped layer 20, installed layer by layer in the container 10, for exchanging gases; a water inlet A, installed at the top of the container 10, for filling water into the container 10; a water outlet B, installed at the bottom of the container 10, for discharging water from the container 10; and a gas inlet C, installed at the bottom of the container 10, for filling pure oxygen into the container 10.

When water enters into the water inlet A and flows from top to bottom, the dissolved oxygen content of the water is approximately equal to 2∼5ppm (which is approximately equal to 20% of the gases dissolved in water), and the remaining 80% of the gases include nitrogen (N₂), carbon dioxide (CO₂) and other gases. Pure oxygen enters from the gas inlet C, and the volume of the oxygen gas is controlled by the dimensions of the container 10, and the wave-shaped layers 20 having wave-shaped interfaces, E, F to L are tanks for the oxygen storage/exchange tank and are also used for creating turbulence to the water flow in order to increase the contact area of water and oxygen, and each wave-shaped layer 20 includes one or more oxygen storage/exchange tanks.

During the use of the oxygen dissolving apparatus, oxygen enters into the container 10 from the gas inlet C at the bottom of the container 10 to fill up each oxygen storage/exchange tank E, F, G, I, J, K, L. After the oxygen has entered into the container 10 and has reached a specific pressure, the water enters into the container 10 from the water inlet A at the top of the container 10 again, and flows through each layer to each oxygen-filled chamber of the oxygen storage/exchange tanks E, F, G, I, J, K, L. Now, the oxygen is dissolved in water naturally. Since the pressure increases the dissolved oxygen content significantly, the water contains plenty of oxygen (O₂) flowing out from the water outlet B.

In the aforementioned design, a large quantity of oxygen is dissolved in water, and the utility rate of oxygen can reach up to 100%, and the principles of the water flowing downward, the gas rising upward, and the gas being dissolved automatically are used for achieving the effect of saturating oxygen in water.

During the use of the apparatus of the present invention, oxygen is entered into the container 10. Now, the pressure in the container 10 is approximately equal to one atmosphere, and the pressure will be increased again to allow water to enter, wherein the pressure can be controlled within a range from one atmosphere to 15 atmospheres.

When the water pressure reaches a desired pressure, the oxygen is dissolved in water according to Henry's Law, and the dissolution rate varies with the contact area between the liquid and the gas, and the design of the wave-shaped layers 20 and the storage tanks E, F, G, I, J, K, L is intended for accelerating the dissolution rate.

The water outlet B can be used for controlling the discharge of water with a high content of dissolved oxygen. After a specific volume of water is discharged, the pressure is increased so that water can enter from the water inlet A again.

Furthermore, the volume of water entering and the pressure are calculated, or a detector is installed in the container 10 for detecting the volume of oxygen gas to estimate the volume of oxygen entering into the water, and the quantity of water remaining undissolved. If the quantity of oxygen is less than a specific quantity, oxygen is filled into the container 10 through the inlet at the bottom of the container 10.

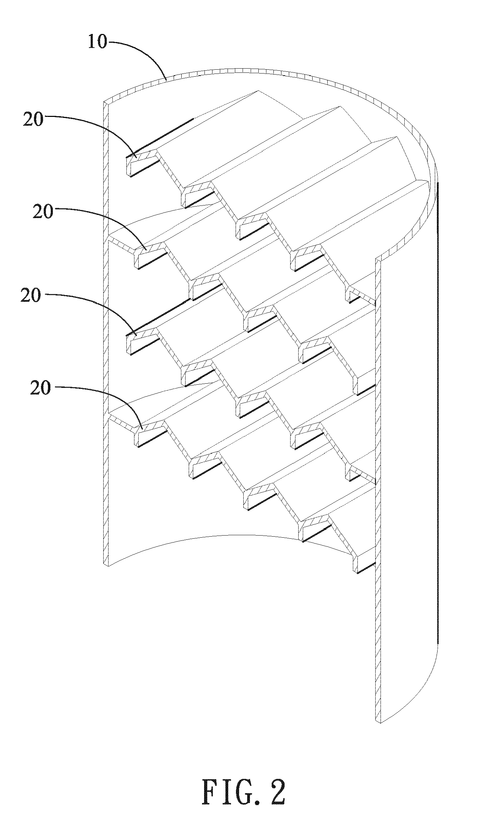

With reference to FIG. 2 for a schematic perspective view of the pressure-reduction oxygen dissolving apparatus in accordance with the present invention, the pressure-reduction oxygen dissolving apparatus comprises a container 10 and a wave-shaped layer 20, and the whole structure of the present invention is shown in FIG. 2.

It is noteworthy to point out that the apparatus can also be applied for filtering other gases, and is not limited to the use of collecting oxygen.

The container 10 can be made of a plastic material (such as an acrylic material and a glass fiber material), a carbon filter material, or a metal material (such as stainless steel, gold, silver, copper and iron).

In addition, a water filter is installed at a front end of the water inlet A for filtering impurities in the water, or a water source (such as a tap or a water bucket) is arranged at the front end of the water inlet A.

The present invention can increase the pressure of the oxygen gas through the gas inlet C at the bottom or increase the pressure of the water through the water inlet A at the top, or increase the pressure of the oxygen gas through the gas inlet C at the bottom and the pressure of the water through the water inlet A at the top simultaneously to achieve the desired pressure to accelerate the dissolution rate of oxygen in water.

In addition, the wave-shaped layers 20 of the present invention are provided for creating turbulence to the water flow, and the gaps between the wave-shaped layers 20 are provided for preventing gases flowing back or mixing at each layer, and the water turbulence is used for increasing the contact area between gas and water to accelerate the gas exchange rate, so that the water obtained at a lower layer contains a larger quantity of oxygen.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A pressure-reduction oxygen dissolving apparatus, comprising:
a container;
at least one wave-shaped layer, installed layer by layer in the container, for exchanging gases;
at least one oxygen storage/exchange tank, installed on each wave-shaped layer in the container, for exchanging gases;
a water inlet, installed at the top of the container, for filling water into the container;
a water outlet, installed at the bottom of the container, for discharging water from the container to the outside; and
a gas inlet, installed at the bottom of the container, for filling pure oxygen into the container.

2. The pressure-reduction oxygen dissolving apparatus of claim 1, wherein the container is made of a plastic material.

3. The pressure-reduction oxygen dissolving apparatus of claim 1, wherein the container is made of a carbon fiber material.

4. The pressure-reduction oxygen dissolving apparatus of claim 1, wherein the container is made of a metal material.

5. The pressure-reduction oxygen dissolving apparatus of claim 1, wherein the container is in a circular cylindrical shape.

6. The pressure-reduction oxygen dissolving apparatus of claim 1, wherein the water inlet includes a water filter installed at the front end of the water filter and provided for filtering an impurity in water.

7. The pressure-reduction oxygen dissolving apparatus of claim 1, wherein the water inlet has the front end coupled to a water source.
